Europäisches Patentamt

European Patent Office

Office européen des brevets

(11) Publication number: **0 394 200**
**A1**

## (12) EUROPEAN PATENT APPLICATION

(21) Application number: **90830112.0**

(22) Date of filing: **19.03.90**

(51) Int. Cl.⁵: **B09B 1/00**

(30) Priority: **17.04.89 IT 3280589 U**

(43) Date of publication of application:
**24.10.90 Bulletin 90/43**

(84) Designated Contracting States:
**AT BE CH DE DK ES FR GB GR LI LU NL SE**

(71) Applicant: **Isidori, Giancarlo**
**Str. Vicinale La Torre, 27**
**I-06100 Perugia(IT)**

Applicant: **Ragugini, Giuseppe**
**Via Compresso, 2/O, Fraz. Colle Umberto**
**I-06100 Perugia(IT)**

(72) Inventor: **Isidori, Giancarlo**
**Str. Vicinale La Torre, 27**
**I-06100 Perugia(IT)**
Inventor: **Ragugini, Giuseppe**
**Via Compresso, 2/O, Fraz. Colle Umberto**
**I-06100 Perugia(IT)**

(74) Representative: **Baldi, Claudio**
**Piazza Ghislieri, 3**
**I-60035 Jesi (Ancona)(IT)**

(54) **Procedure for the disposal of toxic waste in special containers to be placed inside cement containers.**

(57) This invention relates to a cold procedure without destruction for the disposal of liquid and solid refuse and toxic residue of different types and varying degree of danger and for reusing the same in a different form.

The initial idea consists of packing, some times even vacuum packing, storing and/or concealing the disposal residue, using methods which are ecologically friendly to the environment and persons, in suitable containers which in turn are housed in small or medium sized reinforced concrete blocks or blocks made of another material having the same degree of safety, the same being fitted with hooks for lifting and transport to a suitable location.

FIG. 1

## Procedure for the Disposal of Toxic Residue in Special Containers subsequently Placed Inside Cement Containers

Considering the scientifically proven supposition that nothing in nature can be destroyed but only transformed, it is impossible not to realize that any method used in an attempt to destroy refuse and toxic residue will not be successful, and under some aspects destroying these actually worsens the problem one is trying to resolve in that generally liquid or solid products which have been treated are burnt for disposal which means that the majority of poisons in these are transformed from a solid to a gas or volatile vapour state which is then released into the atmosphere and is even more dangerous and more difficult to control than before the treatment.

The solution to the problem of the disposal of harmful substances is not to destroy them since this method, as indicated above, is impossible, but to produce alternative methods, excluding destruction procedures, which ensure safety and guarantee the total and effective elimination of the danger represented by the substances treated.

For major clarity the description according to the invention continues with reference to the enclosed drawings which are intended for illustrative purposes only and not in a limiting sense in which:

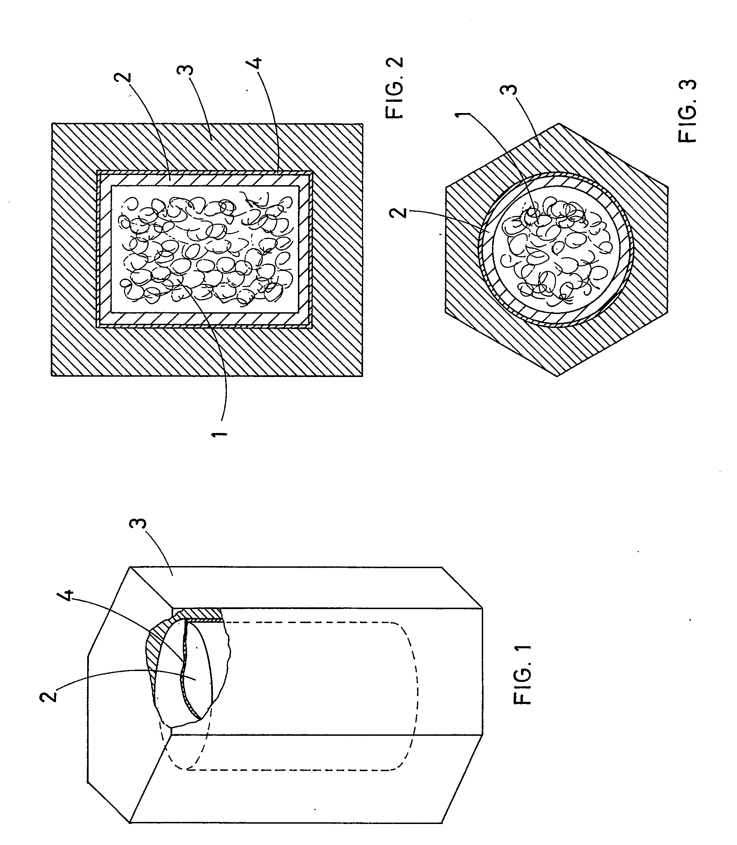

- figure 1 is an axonometric illustration of one of the items produced using the disposal procedure in question;

- figures 1 and 2 are cross sections of fig. 1 with an axial vertical plane;

- figure 3 is a cross section of Figure 1 with a transverse horizontal plane.

Fundamentally the method for the disposal of dangerous material related to this invention involves packing the substances and toxic materials (1) in special primary containers (2) which are in turn embedded in a concrete airtight cast in cement or other material duly reinforced with round steel and/or steel net the same being formed into small or medium sized blocks (3) in any geometrical form.

The primary containers (2) in direct contact with the dangerous substances may be constructed entirely or simply coated internally with a different material, according to the substance this is to contain, to make the same corrosion proof against the different corrosive and harmful substances that they are to contain. The primary container may also have an external cover (4) - made of insulating material to prevent gas or other dangerous vapours and pollutants from escaping - before the same is embedded in the final external covering (3).

The thickness of the walls and the quality of the material of the external lining will be decided with calculations which take into account the dangerousness of the substances in order to make them harmless as well as the resistance required according to where the final product is to be placed or used.

The solution according to the invention resolves many problems related to refuse and toxic residue disposal, above all in the case of the more dangerous substances which the same makes harmless once and for all without any of the direct and collateral effects.

This is a safe method which is fast and easy to use, requiring no costly fixed systems for the cold disposal of refuse which consequently leaves no production residue; the same may be produced directly in the area where the residue is produced or in the place where the inert manufacturing product is to be placed, with small mobile systems.

The most significant characteristic of the invention lies in the fact that the same involves cold production whereby no effects whatsoever, which are harmful or polluting to the environment or people, are produced.

After this packing operation we will have finished products which, regardless of their content, can be considered nothing more than blocks of inert material and which may be placed with no danger whatsoever in any location where they may be concealed, such as natural gorges in mountainous, areas where they may be buried to produce shelves for forest plantations or pastures, or they may be used to fill sea ditches, old abandoned mines, excavations created by mining activities or to produce wind barriers in desert areas or for use in all those areas where the same can be buried.

In addition to the above locations or storing in other open areas which are possible and safe thanks to the inert characteristics of the block, the same being considered as non recoverable blocks, the invention also includes the possibility of using reinforced concrete blocks, inside which the refuse is closed, as heavy manufacturing construction products in works where the mass and weight of the material are determining factors such as in the counterthrust for landslide movements and sliding in mountainous or hillside areas; as a base for road filling or terracing of steep terrain, dams for lakes and in all other works where large and heavy masses of inert material are required like the block made of reinforced concrete or other material used as a protective casing for the containers of refuse to be disposed.

Another fundamental characteristic of the proposal according to the invention is the small and medium size of the containers of the harmful substances to be disposed of and consequently of the blocks in which the same are housed.

The small and medium sizes of the container and final block is of fundamental importance in terms of safety in that it reduces the dangerousness of the product it contains; in fact even if these products are stored or used in large quantities in the same area, the damage produced by a possible criminal or fortuitous accident will always be limited to a small number of containers which, in view of the small amount of material contained, will in no way be dangerous for the surrounding areas.

Another important safety factor that the small or medium size of the container blocks ensures fully is that even if these containers are stored or used in large quantities in seismic areas, even in the case of earthquakes - and even if stored in large numbers - they will not be damaged significantly in that, as a divided mass, the same will follow the movements of the seismic action; the same will cccur in the case of cyclones or storms in the case of burying in the sea.

## Claims

1) A procedure for the disposal of toxic refuse in special containers to be subsequently housed inside cement containers characterized in that the dangerous substances (1) to be disposed of are packed cold and under vacuum inside small and medium sized containers (2) which are in turn protected by a layer of air tight lining (3) which may be produced in any shape or size using reinforced concrete or any other material which ensures adequate insulation, resistance and which are fully corrosion proof.

2) A product for the disposal of toxic refuse produced according to the procedure as per claim 1 characterized in that the same consists of an airtight lining block (3) produced in cement or related materials, housing a container (2) in which the liquid or solid toxic refuse (1) have been placed.

3) A product for the disposal of toxic refuse produced according to the procedure as per claim 1, characterized in that the primary containers (2) in direct contact with the dangerous substances may be entirely constructed or even only lined internally with the most resistant material against the substances the same is to hold; the same (2) may also be fitted - before being finally housed in the above container (3) - with an external lining (4) produced with insulating material to prevent dangerous and polluting gases or vapours from escaping.

4) A Product for the disposal of toxic refuse according to the procedure as per claim 1, characterized in that the lining (3) which houses container (2) may be reinforced with round steel and/or steel net.

FIG. 1

FIG. 2

FIG. 3

EP 0 394 200 A1

Dr. Ing. CLAUDIO BALDI
MANDATARIO ABILITATO

## DOCUMENTS CONSIDERED TO BE RELEVANT

EP 90830112.0

| Category | Citation of document with indication, where appropriate, of relevant passages | Relevant to claim | CLASSIFICATION OF THE APPLICATION (Int. Cl.⁵) |
|---|---|---|---|
| A | DE - A1 - 2 549 304 (AEROJET-GENERAL CORP.) * Claims 1,7; fig. 5,6 * | 1-4 | B 09 B 1/00 |
| A | FR - A1 - 2 358 730 (STEAG KERNENERGIE G.M.B.H) * Claims 1,2; fig. 1,2 * | 1,3 | |
| A | DE - A1 - 3 012 561 (GRAHMANN U) * Claims 1,3,16 * | 1,3 | |
| A | US - A - 4 428 700 (LENNEMANN) * Abstract * | 1-3 | |

TECHNICAL FIELDS SEARCHED (Int. Cl.⁵)

B 09 B 1/00

The present search report has been drawn up for all claims

| Place of search | Date of completion of the search | Examiner |
|---|---|---|
| VIENNA | 26-06-1990 | BRUS |